# EUROPÄISCHE PATENTSCHRIFT

(11) **EP 4 051 559 B1**
(45) Veröffentlichungstag und Bekanntmachung des Hinweises auf die Patenterteilung: **06.12.2023**
(21) Anmeldenummer: 20793357.3
(22) Anmeldetag: 19.10.2020
(51) Int. Cl.: B62D 35/00, B62D 37/02

(54) **BAUKASTENSYSTEM UND VERBINDUNGSEINRICHTUNG FÜR KRAFTFAHRZEUG-LUFTLEITELEMENTE**
MODULAR SYSTEM AND CONNECTION DEVICE FOR MOTOR VEHICLE AIR-GUIDING ELEMENTS
SYSTÈME MODULAIRE ET DISPOSITIF DE RACCORDEMENT POUR ÉLÉMENTS DE GUIDAGE D'AIR DE VÉHICULE AUTOMOBILE

(30) Priorität: 30.10.2019 DE 102019007558
(43) Veröffentlichungstag der Anmeldung: 07.09.2022
(73) Patentinhaber: MAN Truck & Bus SE, 80995 München (DE)
(72) Erfinder: SCHMITZ, Andreas, 80995 München (DE)
(74) Vertreter: v. Bezold & Partner Patentanwälte - PartG mbB
(86) Internationale Anmeldenummer: PCT/EP2020/079388
(87) Internationale Veröffentlichungsnummer: WO 2021/083708

(56) Entgegenhaltungen:
- EP-A1- 0 076 944
- EP-B1- 2 020 366
- DE-U1- 20 009 988
- FR-A1- 2 497 753

## Beschreibung

Die Erfindung betrifft ein Baukastensystem zum verstellbaren Verbinden von Luftleitelementen und Karosserieteilen von Kraftfahrzeugen.

Fahrerhausdächer von Lastkraftwagen können mit Dachspoilern versehen werden, um die Aerodynamik zu verbessern. Die Dachspoiler können den Luftwiderstand zu einem Ladeaufbau des Lastkraftwagens oder einem Auflieger des Lastkraftwagens reduzieren. Der Dachspoiler kann in der Höhe verstellbar sein, um die verschiedenen Höhenunterschiede zwischen Fahrerhausdach und vorderer Ladeaufbauoberkante bzw. Aufliegeroberkante ausgleichen zu können.

Die EP 1 055 589 B1 betrifft eine Halterung für einen am Fahrerhausdach eines Lastkraftwagens angeordneten Dachspoiler, der vorne um eine Horizontalquerachse schwenkbar sowie mittels einer hinteren, sich zwischen ihm und dem Fahrerhaus erstreckenden Stützvorrichtung hinsichtlich seines Anstellwinkels verstellbar und arretierbar ist.

Die EP 2 020 366 B1 betrifft eine Dachspoileranordnung für Nutzfahrzeug-Fahrerhäuser, mit einem Dachspoiler, der mittels einer auf dem Dach eines Fahrerhauses vorgesehenen Schwenklageranordnung um eine Spoilerachse schwenkbar ist. Eine Verstelleinrichtung ist vorgesehen, mittels der der Dachspoiler in unterschiedliche Schwenkpositionen überführbar und dort haltbar ist. Die Verstelleinrichtung ist als Schiebeführung mit einem spoilerseitigen und einem dachseitigen Schiebeführungsteil ausgebildet, die bei einem Verschwenken des Dachspoilers in einer abstützenden Anlageverbindung aneinander anliegen und entlang eines vorgegebenen Verschiebeweges relativ zueinander verlagerbar sind.

Der Erfindung liegt die Aufgabe zu Grunde, eine alternative und/oder verbesserte Technik zum Anbinden eines Luftleitelements an einer Karosserie eines Kraftfahrzeugs zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung betrifft ein Baukastensystem aufweisend ein erstes Luftleitelement für ein erstes Kraftfahrzeug und ein erstes Karosserieteil, vorzugsweise Karosseriedach, für das erste Kraftfahrzeug, wobei das erste Karosserieteil einen ersten Befestigungsabschnitt zum Anbringen des ersten Luftleitelements aufweist. Das Baukastensystem weist ein zweites Luftleitelement für ein zweites Kraftfahrzeug und ein zweites Karosserieteil, vorzugsweise Karosseriedach, für das zweite Kraftfahrzeug auf. Das erste Karosserieteil und das zweite Karosserieteil sind unterschiedlich ausgebildet, vorzugsweise geformt (z. B. unterschiedlich groß und/oder unterschiedlich gewölbt). Das zweite Karosserieteil weist einen zweiten Befestigungsabschnitt zum Anbringen des zweiten Luftleitelements auf. Das Baukastensystem weist eine Verbindungseinrichtung auf, die einen dritten Befestigungsabschnitt, der zur Befestigung an dem ersten Befestigungsabschnitt angeordnet ist, und einen (weiteren) vierten Befestigungsabschnitt, der zur Befestigung an dem zweiten Befestigungsabschnitt angeordnet ist, aufweist. Die Verbindungseinrichtung ist wahlweise zum verstellbaren, vorzugsweise höhenverstellbaren, Verbinden des ersten Karosserieteils und des ersten Luftleitelements oder des zweiten Karosserieteils und des zweiten Luftleitelements verwendbar.

Vorzugsweise ermöglicht das Baukastensystem die Verbindungseinrichtung als ein Gleichteil bei unterschiedlichen Kraftfahrzeugen mit unterschiedlichen Kraftfahrzeugteilen zur Anbindung des Luftleitelements zu verwenden. Die Verbindungseinrichtung kann somit für mehrere Karosserieteilvarianten und optional auch noch für mehrere Luftleitelementvarianten verwendet werden. Damit können die Stückzahlen der Verbindungseinrichtung erhöht und die Teilevielfalt verringert werden. Dies kann eine Senkung der Herstellungskosten bewirken.

Vorzugsweise kann das erste Karosserieteil als ein erstes Karosseriedach für ein Fahrerhaus eines ersten Nutzfahrzeugs (z. B. Lastkraftwagens) ausgeführt sein (z. B. als ein Hochdach).

Bevorzugt kann das zweite Karosserieteil als zweites Karosseriedach für ein Fahrerhaus eines zweiten Nutzfahrzeugs (z. B. Lastkraftwagens) ausgeführt sein (z. B. als ein Flachdach).

In einem Ausführungsbeispiel ist die Verbindungseinrichtung als ein Gleichteil für eine erste Verstelleinrichtung, die zum verstellbaren Verbinden des ersten Karosserieteils und des ersten Luftleitelements ausgebildet ist, und für eine zweite Verstelleinrichtung, die zum verstellbaren Verbinden des zweiten Karosserieteils und des zweiten Luftleitelements ausgebildet ist, verwendbar.

In einem weiteren Ausführungsbeispiel sind das erste Luftleitelement und das zweite Luftleitelement unterschiedlich ausgebildet, vorzugsweise geformt (z. B. unterschiedlich groß oder hoch und/oder unterschiedlich gewölbt).

In einem weiteren Ausführungsbeispiel ist der dritte Befestigungsabschnitt unbenutzt, wenn die Verbindungseinrichtung zur Verbindung mit dem zweiten Karosserieteil verwendet wird. Alternativ oder zusätzlich ist der vierte Befestigungsabschnitt unbenutzt, wenn die Verbindungseinrichtung zur Verbindung mit dem ersten Karosserieteil verwendet wird.

In einer Ausführungsform sind der dritte Befestigungsabschnitt und der vierte Befestigungsabschnitt voneinander beabstandet und/oder unterschiedlich ausgerichtet. So können die Befestigungsabschnitte beispielsweise an unterschiedliche Karosserieteile angepasst sein.

In einer weiteren Ausführungsform ist der dritte Befestigungsabschnitt als ein Durchgangsloch und/oder der vierte Befestigungsabschnitt als ein Durchgangsloch ausgeführt.

In einer weiteren Ausführungsform ist der erste Befestigungsabschnitt auf einer Oberseite des ersten Karosserieteils und/oder der zweite Befestigungsabschnitt auf einer Oberseite des zweiten Karosserieteils angeordnet.

In einer Ausführungsvariante weist das erste Luftleitelement ein erstes Verbindungselement auf, das zweite Luftleitelement weist ein zweites Verbindungselement auf, und die Verbindungseinrichtung weist ein drittes Verbindungselement mit dem dritten Befestigungsabschnitt und dem vierten Befestigungsabschnitt auf. Das dritte Verbindungselement ist verstellbar mit dem ersten Verbindungselement und dem zweiten Verbindungselement verbindbar (z. B. mittels eines Verstellelements). Das dritte Verbindungselement kann somit wahlweise mit dem ersten Verbindungselement oder dem zweiten Verbindungselement verbunden werden.

In einer Weiterbildung sind das erste Verbindungselement und das zweite Verbindungselement unterschiedlich ausgebildet, vorzugsweise geformt, und/oder weisen eine unterschiedliche Höhe auf. Dies kann den Vorteil haben, dass unterschiedliche Luftleitelementvarianten verwendet werden können.

In einer weiteren Ausführungsvariante ist das erste Verbindungselement, das zweite Verbindungselement und/oder das dritte Verbindungselement als Blechformteil ausgeführt. Alternativ oder zusätzlich ist das erste Verbindungselement, das zweite Verbindungselement und/oder dritte Verbindungselement L-förmig oder winkelförmig ausgeführt.

In einer weiteren Ausführungsvariante weist das dritte Verbindungselement einen ersten Schenkel, der den dritten Befestigungsabschnitt und den vierten Befestigungsabschnitt aufweist, und einen zweiten Schenkel, der winkelig zu dem ersten Schenkel angeordnet ist (z. B. in einem Winkel zwischen 60° und 100°), auf. Die Schenkel können ermöglichen, dass die Karosserieteilvarianten zum Befestigen teilweise umgriffen werden können.

In einer Weiterbildung ist der zweite Schenkel an einer Rückseite des ersten Karosserieteils und an einer Rückseite des zweiten Karosserieteils befestigbar (z. B. an entsprechenden Befestigungsabschnitten des ersten Karosserieteils und des zweiten Karosserieteils). Der zweite Schenkel kann somit wahlweise mit dem ersten Karosserieteil oder dem zweiten Karosserieteil verbunden werden.

In einem Ausführungsbeispiel weist der erste Schenkel einen ersten Bereich auf, in dem der dritte Befestigungsabschnitt angeordnet ist, und einen zweiten Bereich auf, in dem der vierte Befestigungsabschnitt angeordnet ist, wobei der erste Bereich und der zweite Bereich angewinkelt zueinander angeordnet sind (z. B. in einem Winkel kleiner 180° und größer 160°). Vorzugsweise ist der erste Bereich an einem freien Ende des ersten Schenkels angeordnet und/oder der erste Bereich und der zweite Bereich grenzen aneinander an.

In einem weiteren Ausführungsbeispiel weist die Verbindungseinrichtung ein Verstellelement auf, das an dem dritten Verbindungselement anbringbar ist und verstellbar, vorzugsweise höhenverstellbar, mit dem ersten Verbindungselement und dem zweiten Verbindungselement verbindbar ist, vorzugsweise in Form einer Schiebeführung. Das Verstellelement kann somit wahlweise mit dem ersten Luftleitelement oder dem zweiten Luftleitelement verbunden werden.

In einer Weiterbildung ist das Verstellelement als ein Kunststoffzwischenstück ausgeführt und/oder zwischen dem ersten Verbindungselement und dritten Verbindungselement und zwischen dem zweiten Verbindungselement und dritten Verbindungselement anordenbar, vorzugsweise zum Verhindern einer Kontaktkorrosion.

In einem weiteren Ausführungsbeispiel ist das Verstellelement lösbar mit dem dritten Verbindungselement verbunden, vorzugsweise mittels einer Rastverbindung (z. B. mit dem zweiten Schenkel des dritten Verbindungselements).

In einem weiteren Ausführungsbeispiel weist das Verstellelement eine Profilierung (z. B. Vertiefung(en) oder Erhebung(en)) auf, die mit einer Profilierung des ersten Verbindungselements und einer Profilierung des zweiten Verbindungselements zum verstellbaren Verbinden zusammenpasst.

In einer Ausführungsform weist die Verbindungseinrichtung ein lösbares Arretierelement auf, mit dem das erste Verbindungselement am dritten Verbindungselement arretierbar ist und das zweite Verbindungselement am dritten Verbindungselement arretierbar ist. Vorzugsweise kann das lösbare Arretierelement als ein Handrad mit verbundener Gewindestange ausgeführt sein. Es ist möglich, dass das lösbare Arretierelement durch ein Langloch des ersten Verbindungselements führbar ist und durch ein Langloch des zweiten Verbindungselements führbar ist. Es ist auch möglich, dass das lösbare Arretierelement in ein Gewinde des Verstellelements und/oder des dritten Verbindungselements zum Arretieren einschraubbar ist.

In einer weiteren Ausführungsform weist das Baukastensystem ferner ein Verkleidungsteil auf, das zum Überdecken eines Spalts zwischen dem zweiten Luftleitelement und dem zweiten Karosserieteil ausgebildet ist. Vorzugsweise kann die Verbindungseinrichtung (z. B. das dritte Verbindungselement oder der erste Schenkel des dritten Verbindungselements) einen fünften Befestigungsabschnitt aufweisen, an dem das Verkleidungsteil befestigbar ist. Bevorzugt kann der fünfte Befestigungsabschnitt unbenutzt sein, wenn die Verbindungseinrichtung mit dem ersten Karosserieteil und dem ersten Luftleitelement verwendet wird. Es ist möglich, dass das Verkleidungsteil ebenfalls als ein Luftleitelement ausgeführt ist, z. B. in einem Abschnitt hinter einer Rückwand des Fahrerhauses und unter dem Dachspoiler.

Die Erfindung betrifft auch eine Verbindungseinrichtung für ein Baukastensystem wie hierin offenbart. Die Verbindungseinrichtung weist ein Verbindungselement mit einem Befestigungsabschnitt zur Befestigung an einem ersten Karosserieteil eines ersten Kraftfahrzeugs und einem weiteren Befestigungsabschnitt zur Befestigung an einem zweiten Karosserieteil eines zweiten Kraftfahrzeugs auf. Das Verbindungselement ist wahlweise zur Befestigung an dem ersten Karosserieteil mittels des Befestigungsabschnitts oder an dem zweiten Karosserieteil mittels des weiteren Befestigungsabschnitts verwendbar. Die Verbindungseinrichtung weist ein Verstellelement auf, das an dem Verbindungselement (z. B. lösbar) angebracht und zum verstellbaren Verbinden mit einem Luftleitelement ausgebildet ist. Mit der Verbindungseinrichtung können die gleichen Vorteile erzielt werden wie mit dem Baukastensystem.

Vorzugsweise kann die Verbindungseinrichtung eines oder mehrere Merkmale der Verbindungseinrichtung des Baukastensystems wie hierin offenbart aufweisen.

Die Erfindung betrifft auch ein Kraftfahrzeug, vorzugsweise ein Nutzfahrzeug (z. B.

Lastkraftwagen), aufweisend ein Karosserieteil, vorzugsweise ein Karosseriedach, ein Luftleitelement, vorzugsweise ein Dachspoiler, und eine Verbindungseinrichtung wie hierin offenbart, die das Karosserieteil verstellbar, vorzugsweise höhenverstellbar, mit dem Luftleitelement verbindet.

Die zuvor beschriebenen bevorzugten Ausführungsformen und Merkmale der Erfindung sind beliebig miteinander kombinierbar, sofern sie in den Schutzbereich der beigefügten Ansprüche fallen.

Weitere Einzelheiten und Vorteile der Erfindung werden im Folgenden unter Bezug auf die beigefügten Zeichnungen beschrieben. Es zeigen:
- Figur 1: eine Explosionsdarstellung einer ersten Verstelleinrichtung gemäß einem Ausführungsbeispiel der vorliegenden Offenbarung;
- Figur 2: eine perspektivische Ansicht einer zweiten Verstelleinrichtung gemäß einem weiteren Ausführungsbeispiel der vorliegenden Offenbarung;
- Figur 3: eine perspektivische Rückansicht eines Daches für ein Fahrerhaus eines Nutzfahrzeugs mit der ersten Verstelleinrichtung und einem ersten Luftleitelement;
- Figur 4: eine Schnittansicht durch das Dach von Figur 3 entlang der ersten Verstelleinrichtung;
- Figur 5: eine perspektivische Rückansicht eines weiteren Daches für ein Fahrerhaus eines Nutzfahrzeugs mit der zweiten Verstelleinrichtung und einem zweiten Luftleitelement;
- Figur 6: eine schematische Schnittansicht durch das Dach von Figur 5 entlang der zweiten Verstelleinrichtung ohne Hintergrund;
- Figur 7: eine perspektivische Vorderansicht des weiteren Daches; und
- Figur 8: Schnittansicht durch das Dach von Figur 5 entlang der zweiten Verstelleinrichtung mit Hintergrund.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

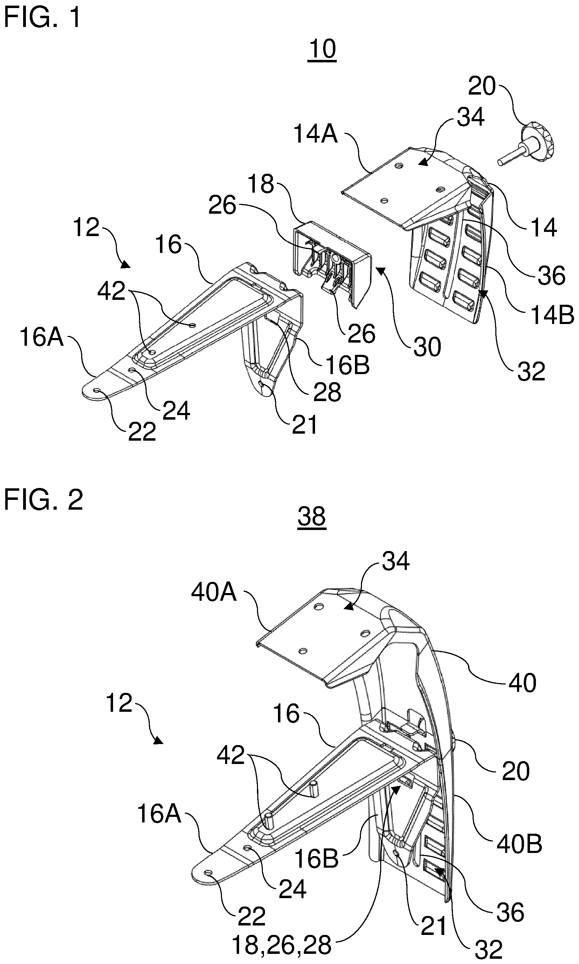

Figur 1 zeigt eine (erste) Verstelleinrichtung 10. Die Verstelleinrichtung 10 ist dazu ausgebildet, ein Luftleitelement verstellbar mit einem Karosserieteil eines Kraftfahrzeugs zu verbinden. Das Luftleitelement kann beispielsweise ein Dachspoiler sein, wie hierin im Detail beschrieben ist. Es ist allerdings auch möglich, dass das Luftleitelement anders ausgeführt ist, zum Beispiel als ein hinter einem Fahrerhaus eines Lastkraftwagens angeordneter Sideflap oder irgendein anderes verstellbares Spoilerelement. Das Karosserieteil ist vorzugsweise als ein Karosseriedach für ein Fahrerhaus eines Lastkraftwagens ausgeführt. Es ist allerdings auch möglich, dass das Karosserieteil anders ausgeführt ist, zum Beispiel als eine Karosserieseitenwand, eine Karosserierückwand, eine Karosserievorderwand oder ein Karosserieboden. Das Karosserieteil kann für ein Kraftfahrzeug, vorzugsweise für ein Nutzfahrzeug, ausgeführt sein.

Die Verstelleinrichtung 10 weist eine Verbindungseinrichtung 12 und ein Verbindungselement 14 auf. Die Verbindungseinrichtung 12 kann verstellbar mit dem Verbindungselement 14 verbunden werden. Die Verbindungseinrichtung 12 kann an dem Karosserieteil befestigt werden. Das Verbindungselement 14 kann an dem Luftleitelement befestigt werden. Damit kann mittels der Verbindungseinrichtung 12 und des Verbindungselements 14 das Luftleitelement verstellbar mit dem Karosserieteil verbunden werden.

Die Verbindungseinrichtung 12 weist ein Verbindungselement 16, ein Verstellelement 18 und ein Arretierelement 20 auf.

Das Verbindungselement 16 weist beispielhaft ein L-Form oder eine Winkelform auf. Beispielsweise kann das Verbindungselement 16 einen ersten Schenkel 16A und einen zweiten Schenkel 16B aufweisen, die angewinkelt miteinander verbunden sind, z. B. in einem Winkel von rund 90° ± 30°. Beide Schenkel 16A und 16B sind an dem Karosserieteil befestigbar. Zum Beispiel kann der Schenkel 16A an einer Oberseite des Karosserieteils befestigt werden. Der Schenkel 16B kann beispielsweise an einer Rückseite des Karosserieteils befestigt werden, z. B. mittels eines vorzugsweise als Durchgangsloch ausgeführten Befestigungsabschnitts 21. Wie dargestellt ist, kann sich der Schenkel 16A und/oder der Schenkel 16B zu dessen freien Enden hin verjüngen und/oder Verprägungen aufweisen, um vorzugsweise eine Steifigkeit des Verbindungselements 16 zu erhöhen.

Das Verbindungselement 16 weist einen Befestigungsabschnitt 22 und einen Befestigungsabschnitt 24 auf. Beispielsweise weist der Schenkel 16A des Verbindungselements 16 die Befestigungsabschnitte 22 und 24 auf. Die Befestigungsabschnitte 22 und 24 können beispielsweise als Durchgangslöcher ausgeführt sein, durch die eine Schraubverbindung mit dem Karosserieteil ermöglicht wird.

Die Befestigungsabschnitte 22 und 24 sind voneinander beabstandet. Der Befestigungsabschnitt 22 kann beispielsweise an einem freien Ende des Schenkels 16A angeordnet sein. Der Befestigungsabschnitt 24 kann neben dem Befestigungsabschnitt 22 weiter innenliegend bezüglich des freien Endes des Schenkels 16A angeordnet sein.

Die Befestigungsabschnitte 22 und 24 können unterschiedlich ausgerichtet sein. Insbesondere können Längsachsen der als Durchgangslöcher ausgeführten Befestigungsabschnitte 22 und 24 nicht parallel sein. Eine Kante des Verbindungselements 16 ist zwischen den Befestigungsabschnitten 22 und 24 angeordnet. In anderen Worten, der Befestigungsabschnitt 22 kann in einem Bereich des Schenkels 16A liegen, der angewinkelt zu einem Bereich des Schenkels 16A ist, in dem der Befestigungsabschnitt 24 angeordnet ist. Der Winkel kann beispielsweise in einem Bereich kleiner als 180° und größer als 160° (oder weniger) liegen.

Die Befestigungsabschnitte 22 und 24 ermöglichen somit, dass das Verbindungselement 16 als ein Gleichteil mit unterschiedlich ausgeführten Karosserieteilen verwendet werden kann. Der Befestigungsabschnitt 22 kann zur Befestigung des Verbindungselements 16 an einem ersten Karosserieteil dienen. Der Befestigungsabschnitt 24 kann zur Befestigung des Verbindungselements 16 an einem zweiten Karosserieteil dienen.

Das Verstellelement 18 ist an dem Verbindungselement 16 angebracht. Vorzugsweise ist das Verstellelement 18 lösbar an dem Verbindungselement 16 angebracht. Zum Beispiel kann das Verstellelement 18 mittels einer Steck- bzw. Rastverbindung lösbar an dem Verbindungselement 16 angebracht sein. In Figur 1 ist eine Ausführung mit Rastverbindung dargestellt, bei der das Verstellelement 18 mindestens ein Rastelement 26 aufweist, das mit mindestens einem daran angepassten Rastelement 28 des Verbindungselements verrastet werden kann. Wie dargestellt ist, können die Rastelemente 26 beispielsweise als Rastnasen und die Rastelemente 28 beispielsweise als Rastöffnungen ausgeführt sein.

Das Verstellelement 18 ist zwischen den Verbindungselementen 14 und 16 anordenbar. Die Verbindungselemente 14 und 16 sind vorzugsweise als Blechformteile ausgeführt. Das Verstellelement 18 ist vorzugsweise als ein Kunststoffzwischenstück ausgeführt. Das Verstellelement 18 kann die Verbindungselemente 14 und 16 voneinander beabstanden, sodass vorzugsweise eine Kontaktkorrosion zwischen den Verbindungselementen 14 und 16 verhindert wird.

Das Verstellelement 18 bildet zusammen mit dem Verbindungselement 14 eine Schiebeführung zum Verschieben des Verbindungselements 14 relativ zum Verstellelement 18 (und dem Verbindungselement 16).

Auf einer dem Verbindungselement 14 zugewandten Seite des Verstellelements 18 weist das Verstellelement 18 eine Profilierung 30 auf (verdeckt in Figur 1). Die Profilierung 30 ist an eine Profilierung 32 des Verbindungselements 14 angepasst. Beispielsweise kann die Profilierung 30 eine Vertiefung oder eine Reihe von Vertiefungen aufweisen. Die Profilierung 32 kann mehrere Reihen von Erhebungen (z. B. Rippen oder Nocken) aufweisen, wobei jeweils nur eine Reihe der Erhebungen in Eingriff mit der Profilierung 30 bringbar ist. So kann das Verbindungselement 14 relativ zu der Verbindungseinrichtung 12 verstellt werden. Es ist möglich, dass beispielsweise die Profilierung 30 eine Erhebung oder eine Reihe von Erhebungen (z. B. Rippen oder Nocken) aufweist und die Profilierung 32 mehrere übereinander angeordnete Reihen von Vertiefungen aufweist.

Das Verbindungselement 14 weist beispielhaft ein L-Form oder eine Winkelform auf. Beispielsweise kann das Verbindungselement 14 einen ersten Schenkel 14A und eine zweiten Schenkel 14B aufweisen, die angewinkelt miteinander verbunden sind, z. B. in einem Winkel von rund 90° ± 30°. Der zweite Schenkel 14B kann, wie dargestellt ist, gekrümmt sein.

Das Verbindungselement 14 kann einen Befestigungsabschnitt 34 aufweisen, der an dem Luftleitelement befestigt ist. Beispielsweise kann der Befestigungsabschnitt 34 an dem ersten Schenkel 14A angeordnet sein. Der Befestigungsabschnitt 34 kann eines oder mehrere Durchgangslöcher zum Verschrauben mit dem Luftleitelement aufweisen.

Das Verbindungselement 14 weist die Profilierung 32 auf, mit der das Verbindungselement 14 verstellbar mit der Profilierung 30 verbunden werden kann. Beispielsweise kann der zweite Schenkel 14B die Profilierung 32 auf einer dem zweiten Schenkel 16B zugewandten Seite aufweisen.

Das Verbindungselement 14 kann ein Langloch 36 aufweisen. Das Langloch 36 kann sich entlang des zweiten Schenkels 16B erstrecken. Das Arretierelement 20 kann durch das Langloch 36 eingesteckt und mit dem Verstellelement 18 und/oder dem Verbindungselement 16 verschraubt werden. So kann das Verbindungselement 14 in einer gewünschten Verstellposition an dem Verbindungselement 16 und/oder dem Verstellelement 18 arretiert werden. Zweckmäßig kann das Arretierelement 20 als ein Handrad mit verbundener Gewindestange ausgeführt sein, wie dargestellt ist.

Die Figur 2 zeigt eine (zweite) Verstelleinrichtung 38. Die Verstelleinrichtung 38 weist die bereits unter Bezugnahme auf Figur 1 beschriebene Verbindungseinrichtung 12 auf.

Statt des Verbindungselements 14 der Verstelleinrichtung 10 weist die Verstelleinrichtung 38 jedoch beispielhaft ein Verbindungselement 40 auf. Das Verbindungselement 40 ist ähnlich wie das Verbindungselement 14 aufgebaut. Das Verbindungselement 40 ist jedoch höher als das Verbindungselement 14. Im Einzelnen kann der zweite Schenkel 40B länger als der zweite Schenkel 14B sein. Damit kann das Verbindungselement 40 an einem Luftleitelement befestigt werden, das sich von dem Luftleitelement unterscheidet, an dem das Verbindungselement 14 befestigbar ist. Dies ermöglicht beispielsweise, dass die Verbindungseinrichtung 12 mit einem anderen, insbesondere höheren, Luftleitelement verstellbar verbunden werden kann.

Vorzugsweise kann das Verbindungselement 16 einen zusätzlichen Befestigungsabschnitt 42 nutzen, an dem beispielsweise ein Verkleidungsteil befestigbar, vorzugsweise verschraubbar ist. Das Verkleidungsteil kann z. B. einen Spalt zwischen dem Karosserieteil und dem Luftleitelement Verdecken bzw. Überbrücken. Zur Veranschaulichung der möglichen Schraubverbindung sind in Figur 2 bereits Schrauben bzw. Bolzen in den als Durchgangslöcher ausgeführten zusätzlichen Befestigungsabschnitt 42 eingesteckt bzw. gefügt.

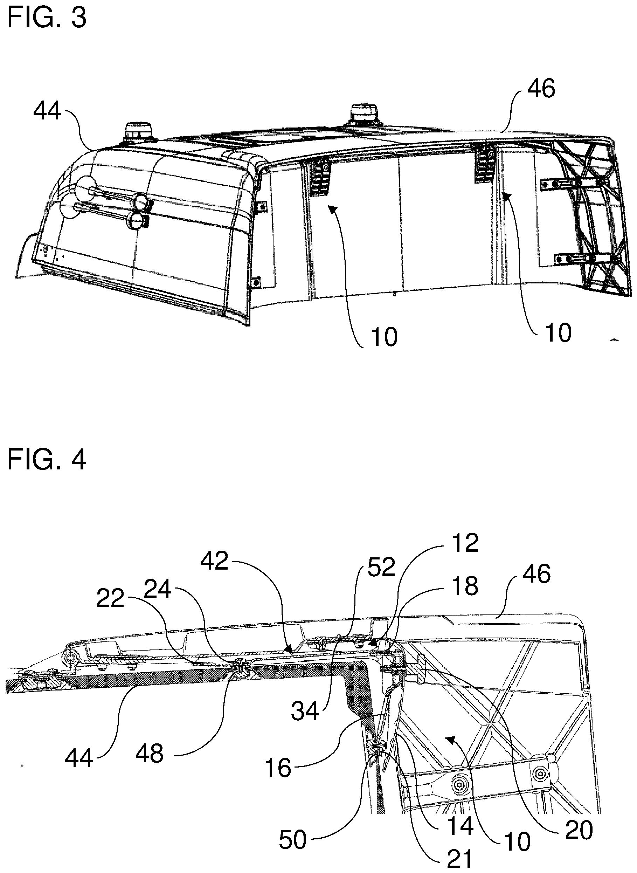

Die Figuren 3 und 4 zeigen die (erste) Verstelleinrichtung 10 in einer beispielhaften Einbausituation. Zur besseren Übersicht sind in den Figuren 3 und 4 nicht alle Elemente der Verstelleinrichtung 10 mit einem Bezugszeichen versehen.

Die Verstelleinrichtung 10 verbindet ein als Fahrzeugdach eines Lastkraftwagens ausgeführtes Karosserieteil 44 höhenverstellbar mit einem als Dachspoiler ausgeführten Luftleitelement 46. Der Verstelleinrichtung 10 kann hierzu doppelt an zueinander beabstandeten Anbindungspunkten des Karosserieteils 44 verwendet werden. Das Luftleitelement 46 ist schwenkbar um eine Schwenkachse gelagert, vorzugsweise in einem Frontbereich des Luftleitelements 46. Mittels der Verstelleinrichtung 10 ist das Luftleitelement 46 in unterschiedliche Schwenkpositionen überführbar und arretierbar.

Der Befestigungsabschnitt 24 des Verbindungselements 16 ist mit einem Befestigungsabschnitt 48 des Karosserieteils 44 verschraubt. Der Befestigungsabschnitt 48 ist an einer Oberseite des Karosserieteils 44 angeordnet. Der Befestigungsabschnitt 21 des Verbindungselements 16 ist mit einem Befestigungsabschnitt 50 des Karosserieteils 44 verschraubt. Der Befestigungsabschnitt 50 ist an einer Rückseite des Karosserieteils 54 angeordnet. Der Befestigungsabschnitt 22 des Verbindungselements 16 ist unbenutzt. Der Befestigungsabschnitt 42 des Verbindungselements 16 ist unbenutzt.

Der Befestigungsabschnitt 34 des Verbindungselements 40 ist mit einem Befestigungsabschnitt 52 des Luftleitelements 46 verschraubt. Der Befestigungsabschnitt 52 ist an einer Unterseite des Luftleitelements 46 angeordnet. Das Arretierelement 20 legt das Verbindungselement 40 relativ zu dem Verbindungselement 16 in der gewünschten Verstellposition des Luftleitelements 46 fest.

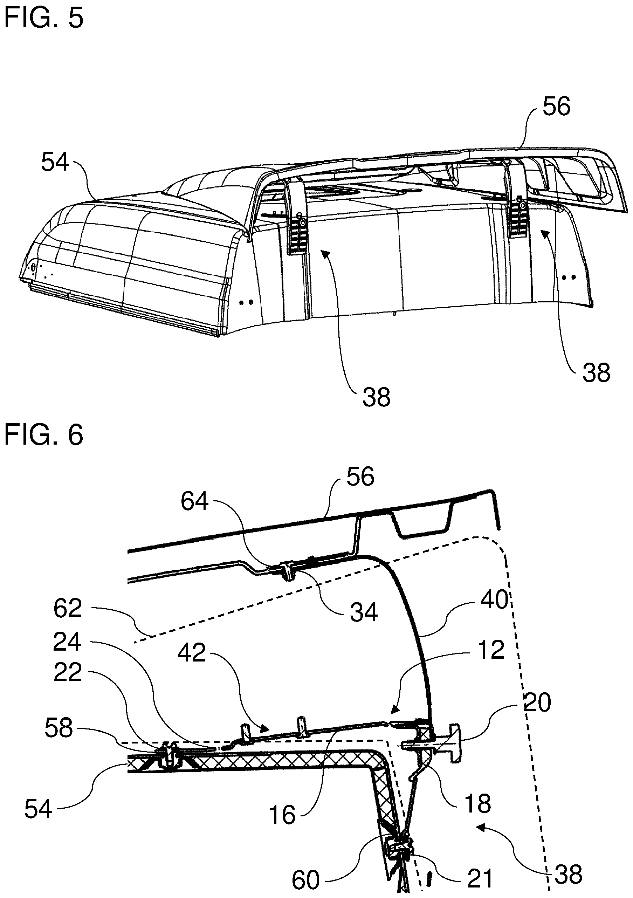

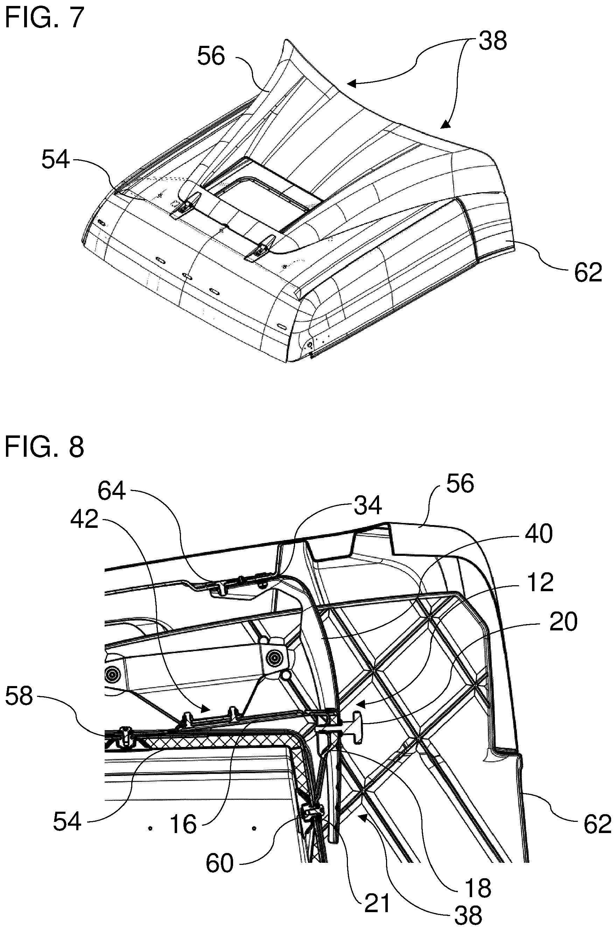

Die Figuren 5 bis 8 zeigen die (zweite) Verstelleinrichtung 38 in einer beispielhaften Einbausituation (verdeckt in Figur 7). Zur besseren Übersicht sind in den Figuren 5 bis 8 nicht alle Elemente der Verstelleinrichtung 38 mit einem Bezugszeichen versehen.

Die Verstelleinrichtung 38 verbindet ein als Fahrzeugdach eines Lastkraftwagens ausgeführtes Karosserieteil 54 höhenverstellbar mit einem als Dachspoiler ausgeführten Luftleitelement 56. Der Verstelleinrichtung 38 kann hierzu doppelt an zueinander beabstandeten Anbindungspunkten des Karosserieteils 54 verwendet werden. Das Luftleitelement 56 ist schwenkbar um eine Schwenkachse gelagert, vorzugsweise in einem Frontbereich des Luftleitelements 56. Mittels der Verstelleinrichtung 38 ist das Luftleitelement 56 in unterschiedliche Schwenkpositionen überführbar und arretierbar.

Das Karosserieteil 54 ist anders ausgeführt (geformt) als das Karosserieteil 44 von den Figuren 3 und 4. Beispielsweise ist das Karosserieteil 54 als ein niedrige Dachvariante und das Karosserieteil 44 als ein Hochdach ausgeführt, wie dargestellt ist.

Das Luftleitelement 56 ist anders ausgeführt (geformt) als das Luftleitelement 46. Beispielsweise kann das Luftleitelement 56 für die niedrige Dachvariante höher ausgeführt sein als das Luftleitelement 46 für das Hochdach. Es ist auch möglich, dass die Luftleitelemente 46 und 56 gleich ausgeführt sind.

Der Befestigungsabschnitt 22 des Verbindungselements 16 ist mit einem Befestigungsabschnitt 58 des Karosserieteils 54 verschraubt. Der Befestigungsabschnitt 58 ist an einer Oberseite des Karosserieteils 54 angeordnet. Der Befestigungsabschnitt 21 des Verbindungselements 16 ist mit einem Befestigungsabschnitt 60 des Karosserieteils 54 verschraubt. Der Befestigungsabschnitt 60 ist an einer Rückseite des Karosserieteils 54 angeordnet.

Ein schematisch in Figur 6 eingezeichnetes Verkleidungsteil 62 ist an dem Befestigungsabschnitt 42 des Verbindungselements 16 befestigt. Das Verkleidungsteil 62 kann einen Spalt zwischen dem Karosserieteil 54 und dem Luftleitelement 56 verdecken, insbesondere wenn das Luftleitelement 56 weit nach oben verstellt wird. Der Befestigungsabschnitt 24 des Verbindungselements 16 ist unbenutzt. Zur Verdeutlichung ist das ebenfalls als Luftleitelement ausgeführte Verkleidungsteil 62 nochmals in den Figuren 7 und 8 eingezeichnet. In Figur 5 ist das Verkleidungsteil 62 hingegen nicht dargestellt.

Der Befestigungsabschnitt 34 des Verbindungselements 14 ist mit einem Befestigungsabschnitt 64 des Luftleitelements 56 verschraubt. Der Befestigungsabschnitt 64 ist an einer Unterseite des Luftleitelements 56 angeordnet. Das Arretierelement 20 legt das Verbindungselement 14 relativ zu dem Verbindungselement 16 in der gewünschten Verstellposition des Luftleitelements 56 fest.

Die vorliegende Offenbarung stellt somit ein Baukastensystem zur Verfügung. Das Baukastensystem erlaubt es, die gleiche Verbindungseinrichtung 12 für unterschiedliche Karosserieteile 44, 54 zur verstellbaren Anbindung gleicher oder unterschiedlicher Luftleitelemente 46, 56 zu verwenden. Vorzugsweise kann die Verbindungseinrichtung 12 als Gleichteil in der ersten Verstelleinrichtung 10 und der zweiten Verstelleinrichtung 38 verwendet werden. In anderen Worten, die Verbindungseinrichtung 12 kann wahlweise in der Verstelleinrichtung 10 oder in der Verstelleinrichtung 38 verwendet werden.

Durch die unterschiedliche Ausrichtung der Befestigungsabschnitte 22 und 24 bzw. die Abkantung zwischen den Befestigungsabschnitten 22 und 24 kann beispielsweise ermöglicht werden, dass das Verbindungselement 16 mit unterschiedlich stark bombierten / gewölbten Karosserieteilen 44, 54 verbindbar ist. Die unterschiedliche Anordnung der Befestigungsabschnitte 22 und 24 kann unterschiedliche Positionierungen der Befestigungsabschnitte 48, 56 ermöglichen oder durch diese bedingt sein. Das Verbindungselement 16 kann mindestens einen zusätzlichen Befestigungsabschnitt 42 aufweisen, der in zumindest einer Anordnung (siehe Figuren 3 und 4) unbenutzt ist, und in zumindest einer Anordnung (siehe Figuren 6 bis 8) benutzt wird, z. B. zur Anbindung des zusätzlichen Verkleidungsteils / Luftleitelements 62.

Es versteht sich, dass die hierin beispielhaft für Fahrzeugdächer und Dachspoiler offenbarte Lehre auf die Anbindung jegliches Luftleitelements an jeglichem Karosserieteil eines Kraftfahrzeugs übertragbar ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Verstelleinrichtung
- 12: Verbindungseinrichtung
- 14: Verbindungselement
- 14A: Erster Schenkel
- 14b: Zweiter Schenkel
- 16: Verbindungselement
- 16A: Erster Schenkel
- 16B: Zweiter Schenkel
- 18: Verstellelement
- 20: Arretierelement
- 21: Befestigungsabschnitt
- 22: Befestigungsabschnitt
- 24: Befestigungsabschnitt
- 26: Rastelement
- 28: Rastelement
- 30: Profilierung
- 32: Profilierung
- 34: Befestigungsabschnitt
- 36: Langloch
- 38: Verstelleinrichtung
- 40: Verbindungselement
- 40A: Erster Schenkel
- 40B: Zweiter Schenkel
- 42: Befestigungsabschnitt
- 44: Karosserieteil
- 46: Luftleitelement
- 48: Befestigungsabschnitt
- 50: Befestigungsabschnitt
- 52: Befestigungsabschnitt
- 54: Karosserieteil
- 56: Luftleitelement
- 58: Befestigungsabschnitt
- 60: Befestigungsabschnitt
- 62: Verkleidungsteil
- 64: Befestigungsabschnitt

## Patentansprüche

1. Baukastensystem, aufweisend:
ein erstes Luftleitelement (46) für ein erstes Kraftfahrzeug;
ein erstes Karosserieteil (44), vorzugsweise Karosseriedach, für das erste Kraftfahrzeug, wobei das erste Karosserieteil (44) einen ersten Befestigungsabschnitt (48) zum Anbringen des ersten Luftleitelements (46) aufweist;
ein zweites Luftleitelement (56) für ein zweites Kraftfahrzeug;
ein zweites Karosserieteil (54), vorzugsweise Karosseriedach, für das zweite Kraftfahrzeug, wobei das erste Karosserieteil (44) und das zweite Karosserieteil (54) unterschiedlich ausgebildet, vorzugsweise geformt, sind und das zweite Karosserieteil (54) einen zweiten Befestigungsabschnitt (58) zum Anbringen des zweiten Luftleitelements (56) aufweist; und
eine Verbindungseinrichtung (12), die einen dritten Befestigungsabschnitt (24), der zur Befestigung an dem ersten Befestigungsabschnitt (48) angeordnet ist, und einen vierten Befestigungsabschnitt (22), der zur Befestigung an dem zweiten Befestigungsabschnitt (58) angeordnet ist, aufweist, sodass die Verbindungseinrichtung (12) wahlweise zum verstellbaren, vorzugsweise höhenverstellbaren, Verbinden des ersten Karosserieteils (44) und des ersten Luftleitelements (46) oder des zweiten Karosserieteils (54) und des zweiten Luftleitelements (56) verwendbar ist.

2. Baukastensystem nach Anspruch 1, wobei:
die Verbindungseinrichtung (12) als ein Gleichteil für eine erste Verstelleinrichtung (10), die zum verstellbaren Verbinden des ersten Karosserieteils (44) und des ersten Luftleitelements (46) ausgebildet ist, und für eine zweite Verstelleinrichtung (38), die zum verstellbaren Verbinden des zweiten Karosserieteils (54) und des zweiten Luftleitelements (56) ausgebildet ist, verwendbar ist; und/oder
das erste Luftleitelement (46) und das zweite Luftleitelement (56) unterschiedlich ausgebildet, vorzugsweise geformt, sind.

3. Baukastensystem nach Anspruch 1 oder Anspruch 2, wobei:
der dritte Befestigungsabschnitt (24) unbenutzt ist, wenn die Verbindungseinrichtung (12) zur Verbindung mit dem zweiten Karosserieteil (54) verwendet wird; und/oder
der vierte Befestigungsabschnitt (22) unbenutzt ist, wenn die Verbindungseinrichtung (12) zur Verbindung mit dem ersten Karosserieteil (44) verwendet wird.

4. Baukastensystem nach einem der vorherigen Ansprüche, wobei:
der dritte Befestigungsabschnitt (24) und der vierte Befestigungsabschnitt (22) voneinander beabstandet und/oder unterschiedlich ausgerichtet sind; und/oder
der dritte Befestigungsabschnitt (24) als ein Durchgangsloch und der vierte Befestigungsabschnitt (22) als ein Durchgangsloch ausgeführt ist; und/oder
der erste Befestigungsabschnitt (48) auf einer Oberseite des ersten Karosserieteils (44) und der zweite Befestigungsabschnitt (58) auf einer Oberseite des zweiten Karosserieteils (54) angeordnet ist.

5. Baukastensystem nach einem der vorherigen Ansprüche, wobei:
das erste Luftleitelement (46) ein erstes Verbindungselement (14) aufweist;
das zweite Luftleitelement (56) ein zweites Verbindungselement (40) aufweist; und
die Verbindungseinrichtung (12) ein drittes Verbindungselement (16) mit dem dritten Befestigungsabschnitt (24) und dem vierten Befestigungsabschnitt (22) aufweist, das verstellbar mit dem ersten Verbindungselement (14) und dem zweiten Verbindungselement (40) verbindbar ist.

6. Baukastensystem nach Anspruch 5, wobei:
das erste Verbindungselement (14) und das zweite Verbindungselement (40) unterschiedlich ausgebildet, vorzugsweise geformt, sind und/oder eine unterschiedliche Höhe aufweisen; und/oder
das erste Verbindungselement (14), das zweite Verbindungselement (40) und das dritte Verbindungselement (16) als Blechformteile ausgeführt sind; und/oder
das erste Verbindungselement (14), das zweite Verbindungselement (40) und dritte Verbindungselement (16) L-förmig oder winkelförmig ausgeführt sind.

7. Baukastensystem nach Anspruch 5 oder Anspruch 6, wobei:
das dritte Verbindungselement (16) einen ersten Schenkel (16A), der den dritten Befestigungsabschnitt (24) und den vierten Befestigungsabschnitt (22) aufweist, und einen zweiten Schenkel (16B), der winkelig zu dem ersten Schenkel (16A) angeordnet ist, aufweist.

8. Baukastensystem nach Anspruch 7, wobei:
der zweite Schenkel (16B) an einer Rückseite des ersten Karosserieteils (44) und an einer Rückseite des zweiten Karosserieteils (54) befestigbar ist.

9. Baukastensystem nach Anspruch 7 oder Anspruch 8, wobei:
der erste Schenkel (16A) einen ersten Bereich aufweist, in dem der dritte Befestigungsabschnitt (24) angeordnet ist, und einen zweiten Bereich aufweist, in dem der vierte Befestigungsabschnitt (22) angeordnet ist, wobei der erste Bereich und der zweite Bereich angewinkelt zueinander angeordnet sind,
wobei vorzugsweise:
der erste Bereich an einem freien Ende des ersten Schenkels (16A) angeordnet ist; und/oder
der erste Bereich und der zweite Bereich aneinander angrenzen.

10. Baukastensystem nach einem der Ansprüche 5 bis 9, wobei:
die Verbindungseinrichtung (12) ein Verstellelement (18) aufweist, das an dem dritten Verbindungselement (16) anbringbar ist und verstellbar, vorzugsweise höhenverstellbar, mit dem ersten Verbindungselement (14) und dem zweiten Verbindungselement (40) verbindbar ist, vorzugsweise in Form einer Schiebeführung.

11. Baukastensystem nach Anspruch 10, wobei:
das Verstellelement (18) als ein Kunststoffzwischenstück ausgeführt und zum Verhindern einer Kontaktkorrosion zwischen dem ersten Verbindungselement (14) und dritten Verbindungselement (16) und zwischen dem zweiten Verbindungselement (40) und dritten Verbindungselement (16) anordenbar ist; und/oder
das Verstellelement (18) lösbar mit dem dritten Verbindungselement (16) verbunden ist, vorzugsweise mittels einer Rastverbindung; und/oder
das Verstellelement (18) eine Profilierung (30) aufweist, die mit einer Profilierung (32) des ersten Verbindungselements (14) und einer Profilierung (32) des zweiten Verbindungselements (40) zum verstellbaren Verbinden zusammenpasst.

12. Baukastensystem nach einem der Ansprüche 5 bis 11, ferner aufweisend:
die Verbindungseinrichtung (12) ein lösbares Arretierelement (20) aufweist, mit dem das erste Verbindungselement (14) am dritten Verbindungselement (16) arretierbar ist und das zweite Verbindungselement (40) am dritten Verbindungselement (16) arretierbar ist,
wobei vorzugsweise:
das lösbare Arretierelement (20) als ein Handrad mit verbundener Gewindestange ausgeführt ist; und/oder
das lösbare Arretierelement (20) durch ein Langloch des ersten Verbindungselements (40) führbar ist und durch ein Langloch des zweiten Verbindungselements (40) führbar ist; und/oder
das lösbare Arretierelement (20) in ein Gewinde des Verstellelements (18) und/oder des dritten Verbindungselements (16) zum Arretieren einschraubbar ist.

13. Baukastensystem nach einem der vorherigen Ansprüche, ferner aufweisend:
ein Verkleidungsteil (62), das zum Überdecken eines Spalts zwischen dem zweiten Luftleitelement (56) und dem zweiten Karosserieteil (54) ausgebildet ist,
wobei:
die Verbindungseinrichtung (12) einen fünften Befestigungsabschnitt aufweist, an dem das Verkleidungsteil (62) befestigbar ist,
wobei vorzugsweise:
der fünfte Befestigungsabschnitt unbenutzt ist, wenn die Verbindungseinrichtung (12) mit dem ersten Karosserieteil (44) und dem ersten Luftleitelement (46) verwendet wird.

14. Verbindungseinrichtung für ein Baukastensystem nach einem der vorherigen Ansprüche, aufweisend:
ein Verbindungselement (16) mit einem Befestigungsabschnitt (24) zur Befestigung an einem ersten Karosserieteil (44) eines ersten Kraftfahrzeugs und einem weiteren Befestigungsabschnitt (22) zur Befestigung an einem zweiten Karosserieteil (54) eines zweiten Kraftfahrzeugs, wobei das Verbindungselement (16) wahlweise zur Befestigung an dem ersten Karosserieteil (44) mittels des Befestigungsabschnitts (24) oder an dem zweiten Karosserieteil (46) mittels des weiteren Befestigungsabschnitts (22) verwendbar ist; und
ein Verstellelement (18), das an dem Verbindungselement (16) angebracht und zum verstellbaren Verbinden mit einem Luftleitelement (46; 56) ausgebildet ist.

15. Kraftfahrzeug, vorzugsweise Nutzfahrzeug, aufweisend:
ein Karosserieteil (44; 54), vorzugsweise ein Karosseriedach;
ein Luftleitelement (46; 56), vorzugsweise ein Dachspoiler; und
eine Verbindungseinrichtung (12) nach Anspruch 14, die das Karosserieteil verstellbar, vorzugsweise höhenverstellbar, mit dem Luftleitelement (46; 56) verbindet.

## Claims

1. Modular system, comprising:
a first air-guiding element (46) for a first motor vehicle;
a first body part (44), preferably a body roof, for the first motor vehicle, wherein the first body part (44) comprises a first fastening portion (48) for mounting the first air-guiding element (46);
a second air-guiding element (56) for a second motor vehicle;
a second body part (54), preferably a body roof, for the second motor vehicle, wherein the first body part (44) and the second body part (54) are differently designed, preferably shaped, and the second body part (54) comprises a second fastening portion (58) for mounting the second air-guiding element (56); and
a connecting device (12) which comprises a third fastening portion (24), which is arranged for fastening to the first fastening portion (48), and a fourth fastening portion (22), which is arranged for fastening to the second fastening portion (58), such that the connecting device (12) can be selectively used for adjustably, preferably height-adjustably, connecting the first body part (44) and the first air-guiding element (46) or the second body part (54) and the second air-guiding element (56).

2. Modular system according to Claim 1, wherein:
the connecting device (12) can be used as an identical part for a first adjusting device (10), which is designed for adjustably connecting the first body part (44) and the first air-guiding element (46), and for a second adjusting device (38), which is designed for adjustably connecting the second body part (54) and the second air-guiding element (56); and/or
the first air-guiding element (46) and the second air-guiding element (56) are differently designed, preferably shaped.

3. Modular system according to Claim 1 or 2, wherein:
the third fastening portion (24) is unused when the connecting device (12) is used for connecting to the second body part (54); and/or
the fourth fastening portion (22) is unused when the connecting device (12) is used for connecting to the first body part (44).

4. Modular system according to one of the preceding claims, wherein:
the third fastening portion (24) and the fourth fastening portion (22) are spaced apart from one another and/or differently oriented; and/or
the third fastening portion (24) is configured as a through-hole and the fourth fastening portion (22) is configured as a through-hole; and/or
the first fastening portion (48) is arranged on an upper side of the first body part (44) and the second fastening portion (58) is arranged on an upper side of the second body part (54).

5. Modular system according to one of the preceding claims, wherein:
the first air-guiding element (46) comprises a first connecting element (14);
the second air-guiding element (56) comprises a second connecting element (40); and
the connecting device (12) comprises a third connecting element (16) with the third fastening portion (24) and the fourth fastening portion (22), which is able to be adjustably connected to the first connecting element (14) and the second connecting element (40).

6. Modular system according to Claim 5, wherein:
the first connecting element (14) and the second connecting element (40) are differently designed, preferably shaped, and/or comprise a different height; and/or
the first connecting element (14), the second connecting element (40) and the third connecting element (16) are configured as shaped sheet-metal parts; and/or
the first connecting element (14), the second connecting element (40) and third connecting element (16) are configured to be L-shaped or angle-shaped.

7. Modular system according to Claim 5 or Claim 6, wherein:
the third connecting element (16) comprises a first leg (16A), which comprises the third fastening portion (24) and the fourth fastening portion (22), and a second leg (16B), which is arranged at an angle to the first leg (16A).

8. Modular system according to Claim 7, wherein:
the second leg (16B) can be fastened to a rear side of the first body part (44) and to a rear side of the second body part (54).

9. Modular system according to Claim 7 or Claim 8, wherein:
the first leg (16A) comprises a first region, in which the third fastening portion (24) is arranged, and comprises a second region, in which the fourth fastening portion (22) is arranged, wherein the first region and the second region are arranged angled to one another,
wherein preferably:
the first region is arranged on a free end of the first leg (16A); and/or
the first region and the second region adjoin one another.

10. Modular system according to one of Claims 5 to 9, wherein:
the connecting device (12) comprises an adjusting element (18), which can be mounted on the third connecting element (16) and can be adjustably, preferably height-adjustably, connected to the first connecting element (14) and to the second connecting element (40), preferably in the form of a sliding guide.

11. Modular system according to Claim 10, wherein:
the adjusting element (18) is configured as a plastic intermediate piece and can be arranged for preventing contact corrosion between the first connecting element (14) and third connecting element (16) and between the second connecting element (40) and third connecting element (16); and/or
the adjusting element (18) is releasably connected to the third connecting element (16), preferably by means of a latching connection; and/or
the adjusting element (18) comprises a profiling (30) which fits together with a profiling (32) of the first connecting element (14) and a profiling (32) of the second connecting element (40) for adjustable connection.

12. Modular system according to one of Claims 5 to 11, further comprising:
the connecting device (12) comprises a releasable arresting element (20) by means of which the first connecting element (14) can be arrested on the third connecting element (16) and the second connecting element (40) can be arrested on the third connecting element (16),
wherein preferably:
the releasable arresting element (20) is configured as a handwheel with connected threaded rod; and/or
the releasable arresting element (20) can be guided through an oblong hole in the first connecting element (40) and can be guided through an oblong hole in the second connecting element (40); and/or
the releasable arresting element (20) can be screwed into a thread of the adjusting element (18) and/or of the third connecting element (16) for arresting purposes.

13. Modular system according to one of the preceding claims, further comprising:
a cladding part (62) which is designed for covering a gap between the second air-guiding element (56) and the second body part (54),
wherein:
the connecting device (12) comprises a fifth fastening portion to which the cladding part (62) can be fastened,
wherein preferably:
the fifth fastening portion is unused when the connecting device (12) is used with the first body part (44) and the first air-guiding element (46).

14. Connecting device for a modular system according to one of the preceding claims, comprising:
a connecting element (16) with a fastening portion (24) for fastening to a first body part (44) of a first motor vehicle and a further fastening portion (22) for fastening to a second body part (54) of a second motor vehicle, wherein the connecting element (16) can be selectively used for fastening to the first body part (44) by means of the fastening portion (24) or to the second body part (46) by means of the further fastening portion (22); and
an adjusting element (18) which is mounted on the connecting element (16) and is designed for adjustable connection to an air-guiding element (46; 56).

15. Motor vehicle, preferably a utility vehicle, comprising:
a body part (44; 54), preferably a body roof;
an air-guiding element (46; 56), preferably a roof spoiler; and
a connecting device (12) according to Claim 14 which connects the body part adjustably, preferably height-adjustably, to the air-guiding element (46; 56).

## Revendications

1. Système modulaire, présentant :
un premier élément de guidage d'air (46) pour un premier véhicule automobile ;
une première pièce de carrosserie (44), de préférence un toit de carrosserie, pour le premier véhicule automobile, la première pièce de carrosserie (44) présentant une première section de fixation (48) pour monter le premier élément de guidage d'air (46) ;
un deuxième élément de guidage d'air (56) pour un deuxième véhicule automobile ;
une deuxième pièce de carrosserie (54), de préférence un toit de carrosserie, pour le deuxième véhicule automobile, la première pièce de carrosserie (44) et la deuxième pièce de carrosserie (54) étant configurées, de préférence façonnées, de manière différente et la deuxième pièce de carrosserie (54) présentant une deuxième section de fixation (58) pour monter le deuxième élément de guidage d'air (56) ; et
un dispositif de liaison (12) présentant une troisième section de fixation (24) agencée pour être fixée à la première section de fixation (48) et une quatrième section de fixation (22) agencée pour être fixée à la deuxième section de fixation (58), de telle sorte que le dispositif de liaison (12) peut être utilisé sélectivement pour relier de manière réglable, de préférence de manière réglable en hauteur, la première pièce de carrosserie (44) et le premier élément de guidage d'air (46) ou la deuxième pièce de carrosserie (54) et le deuxième élément de guidage d'air (56).

2. Système modulaire selon la revendication 1, dans lequel :
le dispositif de liaison (12) peut être utilisé comme une pièce invariante pour un premier dispositif de réglage (10), qui est configuré pour relier de manière réglable la première pièce de carrosserie (44) et le premier élément de guidage d'air (46), et pour un deuxième dispositif de réglage (38), qui est configuré pour relier de manière réglable la deuxième pièce de carrosserie (54) et le deuxième élément de guidage d'air (56) ; et/ou
le premier élément de guidage d'air (46) et le deuxième élément de guidage d'air (56) sont configurés, de préférence façonnés, de manière différente.

3. Système modulaire selon la revendication 1 ou la revendication 2, dans lequel :
la troisième section de fixation (24) est inutilisée lorsque le dispositif de liaison (12) est utilisé pour la liaison avec le deuxième pièce de carrosserie (54) ; et/ou
la quatrième section de fixation (22) est inutilisée lorsque le dispositif de liaison (12) est utilisé pour la liaison avec la première pièce de carrosserie (44).

4. Système modulaire selon l'une quelconque des revendications précédentes, dans lequel :
la troisième section de fixation (24) et la quatrième section de fixation (22) sont espacées l'une de l'autre et/ou orientées différemment ; et/ou
la troisième section de fixation (24) est réalisée sous la forme d'un trou traversant et la quatrième section de fixation (22) est réalisée sous la forme d'un trou traversant ; et/ou
la première section de fixation (48) est agencée sur un côté supérieur de la première pièce de carrosserie (44) et la deuxième section de fixation (58) est agencée sur un côté supérieur de la deuxième pièce de carrosserie (54) .

5. Système modulaire selon l'une quelconque des revendications précédentes, dans lequel :
le premier élément de guidage d'air (46) présente un premier élément de liaison (14) ;
le deuxième élément de guidage d'air (56) présente un deuxième élément de liaison (40) ; et
le dispositif de liaison (12) présente un troisième élément de liaison (16) avec la troisième section de fixation (24) et la quatrième section de fixation (22), qui peut être relié de manière réglable au premier élément de liaison (14) et au deuxième élément de liaison (40) .

6. Système modulaire selon la revendication 5, dans lequel :
le premier élément de liaison (14) et le deuxième élément de liaison (40) sont configurés, de préférence façonnés, de manière différente et/ou présentent une hauteur différente ; et/ou
le premier élément de liaison (14), le deuxième élément de liaison (40) et le troisième élément de liaison (16) sont réalisés sous forme de pièces façonnées en tôle ; et/ou
le premier élément de liaison (14), le deuxième élément de liaison (40) et le troisième élément de liaison (16) sont réalisés en forme de L ou en forme d'angle.

7. Système modulaire selon la revendication 5 ou la revendication 6, dans lequel :
le troisième élément de liaison (16) présente une première branche (16A) présentant la troisième section de fixation (24) et la quatrième section de fixation (22), et une deuxième branche (16B) agencée angulairement par rapport à la première branche (16A).

8. Système modulaire selon la revendication 7, dans lequel :
la deuxième branche (16B) peut être fixée à un côté arrière de la première pièce de carrosserie (44) et à un côté arrière de la deuxième pièce de carrosserie (54).

9. Système modulaire selon la revendication 7 ou la revendication 8, dans lequel :
la première branche (16A) présente une première zone dans laquelle est agencée la troisième section de fixation (24) et une deuxième zone dans laquelle est agencée la quatrième section de fixation (22), la première zone et la deuxième zone étant agencées de manière angulaire l'une par rapport à l'autre,
dans lequel de préférence :
la première zone est agencée à une extrémité libre de la première branche (16A) ; et/ou
la première zone et la deuxième zone sont adjacentes l'une à l'autre.

10. Système modulaire selon l'une quelconque des revendications 5 à 9, dans lequel :
le dispositif de liaison (12) présente un élément de réglage (18) qui peut être monté sur le troisième élément de liaison (16) et qui peut être relié de manière réglable, de préférence de manière réglable en hauteur, au premier élément de liaison (14) et au deuxième élément de liaison (40), de préférence sous la forme d'une glissière coulissante.

11. Système modulaire selon la revendication 10, dans lequel :
l'élément de réglage (18) est réalisé sous la forme d'une pièce intermédiaire en matière plastique et peut être agencé entre le premier élément de liaison (14) et le troisième élément de liaison (16) et entre le deuxième élément de liaison (40) et le troisième élément de liaison (16) pour empêcher une corrosion de contact ; et/ou
l'élément de réglage (18) est relié de manière amovible au troisième élément de liaison (16), de préférence au moyen d'une liaison par encliquetage ; et/ou
l'élément de réglage (18) présente un profilage (30) qui est accordé à un profilage (32) du premier élément de liaison (14) et à un profilage (32) du deuxième élément de liaison (40) pour la liaison réglable.

12. Système modulaire selon l'une quelconque des revendications 5 à 11, présentant en outre :
le dispositif de liaison (12) présente un élément de blocage amovible (20), avec lequel le premier élément de liaison (14) peut être bloqué sur le troisième élément de liaison (16) et le deuxième élément de liaison (40) peut être bloqué sur le troisième élément de liaison (16),
dans lequel de préférence :
l'élément de blocage (20) est réalisé sous la forme d'un volant avec une tige filetée reliée ; et/ou
l'élément de blocage amovible (20) peut être guidé à travers un trou oblong du premier élément de liaison (40) et peut être guidé à travers un trou oblong du deuxième élément de liaison (40) ; et/ou
l'élément de blocage amovible (20) peut être vissé dans un filetage de l'élément de réglage (18) et/ou du troisième élément de liaison (16) pour le blocage.

13. Système modulaire selon l'une quelconque des revendications précédentes, présentant en outre :
une pièce de garniture (62) configurée pour recouvrir un interstice entre le deuxième élément de guidage d'air (56) et la deuxième pièce de carrosserie (54),
dans lequel :
le dispositif de liaison (12) présente une cinquième section de fixation à laquelle la pièce de garniture (62) peut être fixée,
dans lequel de préférence :
la cinquième section de fixation est inutilisée lorsque le dispositif de liaison (12) est utilisé avec la première pièce de carrosserie (44) et le premier élément de guidage d'air (46).

14. Dispositif de liaison pour un système modulaire selon l'une quelconque des revendications précédentes, présentant :
un élément de liaison (16) avec une section de fixation (24) pour la fixation à une première pièce de carrosserie (44) d'un premier véhicule automobile et une autre section de fixation (22) pour la fixation à une deuxième pièce de carrosserie (54) d'un deuxième véhicule automobile, l'élément de liaison (16) pouvant être utilisé sélectivement pour la fixation à la première pièce de carrosserie (44) au moyen de la section de fixation (24) ou à la deuxième pièce de carrosserie (46) au moyen de l'autre section de fixation (22) ; et
un élément de réglage (18) monté sur l'élément de liaison (16) et configuré pour être relié de manière réglable à un élément de guidage d'air (46 ; 56).

15. Véhicule automobile, de préférence véhicule utilitaire, présentant :
une pièce de carrosserie (44 ; 54), de préférence un toit de carrosserie ;
un élément de guidage d'air (46 ; 56), de préférence un déflecteur de toit ; et
un dispositif de liaison (12) selon la revendication 14, qui relie la pièce de carrosserie de manière réglable, de préférence de manière réglable en hauteur, à l'élément de guidage d'air (46 ; 56).
